# EUROPÄISCHE PATENTSCHRIFT

(11) **EP 1 189 742 B1**
(45) Veröffentlichungstag und Bekanntmachung des Hinweises auf die Patenterteilung: **26.02.2003**
(21) Anmeldenummer: 00938687.1
(22) Anmeldetag: 26.05.2000
(51) Int. Cl.: B29C 51/08, B29C 51/26

(54) **VERFAHREN ZUR APPLIZIERUNG DREIDIMENSIONAL VERFORMTER FOLIEN AUF KOMPLEXEN OBERFLÄCHEN**
METHOD FOR APPLYING THREE-DIMENSIONALLY FORMED SHEETS TO COMPLEX SURFACES
PROCEDE POUR L'APPLICATION DE FEUILLES DEFORMEES SUIVANT TROIS DIMENSIONS SUR DES SURFACES COMPLEXES

(30) Priorität: 09.06.1999 DE 19926143
(43) Veröffentlichungstag der Anmeldung: 27.03.2002
(73) Patentinhaber: Volkswagen Aktiengesellschaft, 38436 Wolfsburg (DE)
(72) Erfinder: HEROLD, Klaus-Peter, D-38165 Lehre (DE); RIECK, Klaus, D-38108 Braunschweig (DE)
(86) Internationale Anmeldenummer: EP0004810
(87) Internationale Veröffentlichungsnummer: WO00076748

(56) Entgegenhaltungen:
- EP-A- 0 349 749
- DE-A- 19 732 308
- DE-A- 19 825 762

## Beschreibung

Die Erfindung bezieht sich auf ein Verfahren nach dem Oberbegriff des Patentanspruchs 1.

Tiefgezogene Folien können zum Schutz oder zur Dekoration von Karosserieteilen oder anderen verformten Körpern eingesetzt werden. Problematisch ist immer der Positionierund Verklebe- oder Verschmelzvorgang zwischen Folie und Karosserieoberfläche. Bedingt durch ihre geringe Dicke und Instabilität ist ein automatisches Greifen, Transportieren, Verpressen und Positionieren von verformten Folien in der Praxis äußerst schwierig und vielen Zufälligkeiten unterworfen. Darüber hinaus muß zwischen Folie und verformtem Körper, z. B. einem Karosserieteil, eine Kleberschicht aufgebracht werden, was den gesamten Vorgang zusätzlich erschwert, selbst dann, wenn das Aufbringen der Folie manuell erfolgt.

Bei einem bekannten Verfahren der eingangs bezeichneten Art wird die Folie nach dem in einer entsprechenden Negativform erfolgenden Verformen diesem Tiefziehwerkzeug entnommen und ihrer weiteren Verwendung (siehe oben) zugeführt. Die dann bei der Applizierung auf den betreffenden Formkörper auftretenden Schwierigkeiten wurden bereits eingangs geschildert.

DE-197,32,308 zeigt ein Verfahren nach dem Oberbegriff des Anspruchs 1.

Aufgabe der Erfindung ist es, hier wirksame Abhilfe zu schaffen.

Gemäß der Erfindung wird die Aufgabe bei einem Verfahren der eingangs bezeichneten Gattung durch die kennzeichnenden Maßnahmen des Patentanspruchs 1 gelöst.

Vorteilhafte Ausgestaltungen des Grundgedankens der Erfindung enthalten die Patentansprüche 2 bis 9.

Durch die Erfindung wird der Vorteil einer exakten Schnittführung und Positionierung der Folie erreicht. Die Tiefziehform bildet dabei eine wesentliche Positionierhilfe. Sehr vorteilhaft erweist sich ferner die durch die Erfindung eröffnete Möglichkeit des Aufbringens eines Flächendruckes (z.B. mechanisch oder per Luftüberdruck) und die mögliche Automatisierung des gesamten Fertigungsablaufes (Ziehen, Schneiden, Positionieren, Transportieren, Verpressen).

Da das Folienteil mit der Wirkseite (Außenseite) zum Tiefziehwerkzeug hin gewandt ist, kann auf der Folie der Kleber (z. B. Kontakt- oder Schmelzkleber) vorappliziert sein, so daß ein aufwendiger nachträglicher Kleberauftrag entfällt.

Über die Dicke der Schmelzkleberschicht lassen sich zudem Toleranzschwankungen ausgleichen. Auch das Umbördeln von Rändern oder Verschweißen von Überlappnähten wird durch den Einsatz des erfindungsgemäßen Verfahrens und eines entsprechenden, als "Muttifunktionsform" ausgebildeten Tiefziehwerkzeuges gegenüber dem bekannten manuellen Handling oder dem Einsatz von Robotern wesentlich vereinfacht.

Das erfindungsgemäße Verfahren eignet sich besonders gut zur Realisierung eines - partiellen oder vollflächigen - Unterbodenschutzes eines Kraftfahrzeuges durch Applizierung einer Tiefziehfolie. Hierdurch kann der herkömmliche PVC-Unterbodenschutz ersetzt werden.

Selbstverständlich ist die Anwendung der Erfindung nicht auf Automobil- oder Karosserieteile beschränkt. Vielmehr lassen sich durch das erfindungsgemäße Verfahren gleichermaßen auch beliebige andere Formkörper mit Tiefziehfolie beschichten.

In der Zeichnung sind - in schematisierter Form - Ausführungsbeispiele für die Durchführung des erfindungsgemäßen Verfahrens dargestellt, die im folgenden detailliert beschrieben werden. Es zeigen:
- Fig. 1: - in Seitenansicht - eine Anlage zur Herstellung und Applizierung tiefgezogener Folien und
- Fig. 2: Anlage und Arbeitsvorgang entsprechend Fig. 1, jedoch in Draufsicht betrachtet.

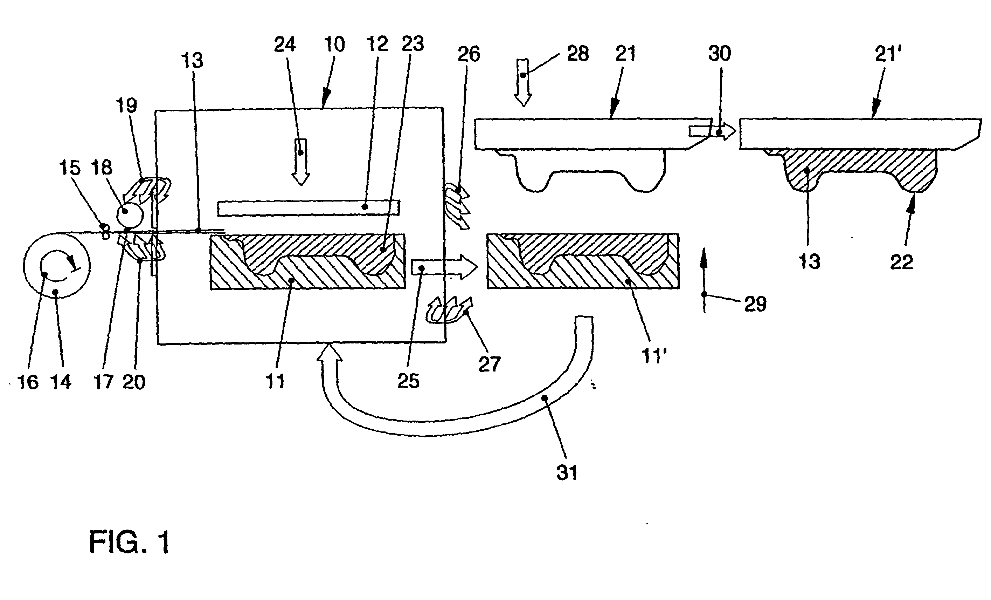

In Fig. 1 bezeichnet 10 insgesamt eine Tiefziehanlage, beinhaltend ein Tiefziehwerkzeug (Tiefziehform) 11 und einen Schneidestempel 12. Eine in dem Tiefziehwerkzeug 11 zu verformende Folie 13 ist auf einem Foliencoil 14 aufgewickelt und wird von dort über Führungsrollen 15 dem Tiefziehwerkzeug 11 zugeführt. Die Drehrichtung des Foliencoils 14 ist durch einen Pfeil 16 angedeutet. Die auf dem Foliencoil 14 aufgespulte Folie 13 ist zunächst mit einer Schutzfolie 17 beschichtet, die vor der Einführung der Folie 13 in die Tiefziehanlage 10 durch einen Schutzfoliensammler 18 abgezogen und aufgespult wird. Danach wird die Folie 13 - wie durch Pfeile 19, 20 angedeutet - auf ihrer Ober- und Unterseite ionisiert.

Ein mit der tiefzuziehenden Folie 13 zu beschichtendes Werkstück, z.B. ein Karosserieteil eines Kraftfahrzeuges, ist insgesamt mit 21 bezeichnet. Es weist einen verformten Bereich 22 auf, dessen Konturen das genaue Gegenstück zu einer mit 23 bezifferten Vertiefung in dem Tiefziehwerkzeug 11 darstellen.

Der Tiefziehvorgang wird in der Tiefziehanlage 10 durch einen Stempel (nicht gezeigt) bewerkstelligt, dessen Konturen denen des Werkstück-Formteils 22 entsprechen. Hierbei drückt der Stempel die Folie 13 in Pfeilrichtung 24 in die Vertiefung 23 des Tiefziehwerkzeuges 11 bis sie exakt deren Form angenommen hat. Danach wird der Stempel wieder aus dem Tiefziehwerkzeug 11 nach oben herausgefahren.

Anschließend erfolgt das Zuschneiden der gezogenen Folie 13 durch den Schneidestempel 12, der hierbei in Pfeilrichtung 24 nach unten bewegt wird. Danach kann eine Beschichtung der noch in den Tiefziehwerkzeug 11 befindlichen Folie 13 mit einem geeigneten Kleber erfolgen.

Im Anschluß daran wird das Tiefziehwerkzeug 11 mit der noch darin liegenden tiefgezogenen und zugeschnittenen sowie - gegebenenfalls - mit Kleber beschichteten Folie 13 in Pfeilrichtung 25 in die Position 11' verfahren. Während dieses Vorgangs kann wiederum eine lonisierung der Folie 13 erfolgen, wie Pfeile 26, 27 verdeutlichen. Das Werkstück 21 wird nun - in Pfeilrichtung 28 - nach unten verfahren, wobei schließlich das Formteil 22 in die deckungsgleiche Vertiefung 23 des Tiefziehwerkzeuges 11 exakt eingefügt und mit der Folie 13 verpreßt wird.

Der vorstehend beschriebene Vorgang kann - alternativ - auch so vonstatten gehen, daß das Werkstück 21 in der aus Fig. 1 ersichtlichen (oberen) Stellung verbleibt und - zwecks Verfügen und Verpressen der Folie 13 - das Tiefziehwerkzeug 11 aus der Position 11' in Pfeilrichtung 29 nach oben bewegt wird.

Das mit der gezogenen Folie 13 beschichtete Werkstück 21 kann nun - in Pfeilrichtung 30 - in die Stellung 21' verfahren bzw. seiner weiteren Verwendung zugeführt werden.

Das Tiefziehwerkzeug 11 wird schließlich aus der Stellung 11' - wie durch einen Pfeil 31 angedeutet - wieder in seine Ausgangsposition innerhalb der Tiefziehanlage 10 zurückbewegt, wo dann ein neuer Tiefziehvorgang beginnen kann.

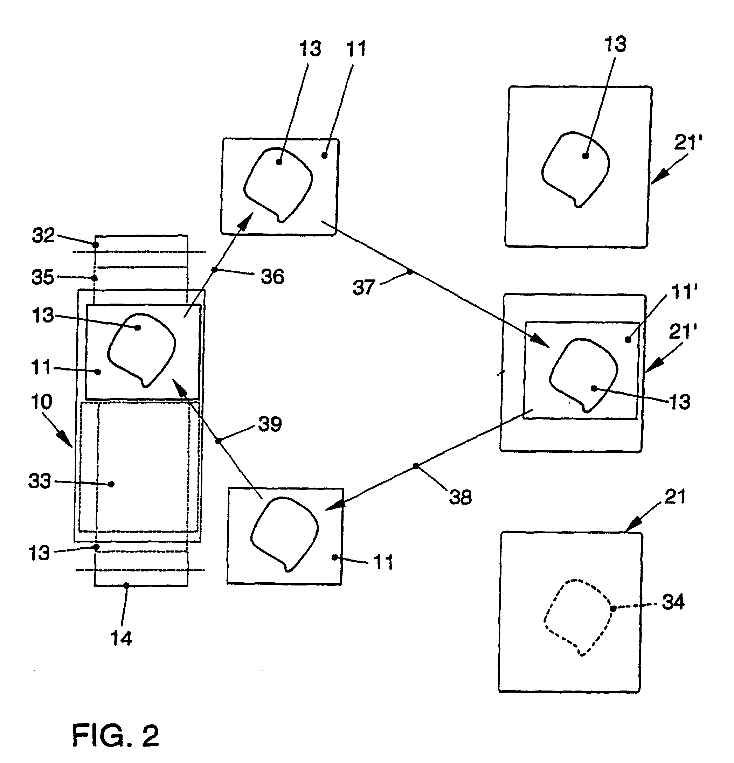

Bei der- noch stärker als in Fig. 1 schematisierten - Darstellung nach Fig. 2 bezeichnet wiederum 10 eine Tiefziehanlage mit Tiefziehwerkzeug 11. Ein mit einer tiefgezogenen Folie zu beschichtendes Werkstück ist - wie in Fig. 1 - mit 21 beziffert. Der Bereich des Werkstücks 21, der mit Folie beschichtet werden soll, ist mit einer punktierten Linie 34 markiert.

Bestandteile der Tiefziehanlage 10 sind eine Folienrolle 14, eine Aufhaspelrolle 32, ein Aufheizbereich 33 für die von der Folienrolle 14 abgezogene Folie 13 sowie das bereits erwähnte Tiefziehwerkzeug 11.

Nachdem die Folie 13 von der Folienrolle 14 in die Tiefziehanlage 10 gelangt ist, wird sie dort im Aufheizbereich 33 erwärmt, mit einer Kleberschicht versehen und anschließend im Tiefziehwerkzeug 11 verformt (tiefgezogen). Auch das Zurechtschneiden der Folie 13 entsprechend den Konturen des zu beschichtenden Werkstück-Bereiches 34 erfolgt innerhalb des Tiefziehwerkzeuges 11 (siehe hierzu Fig. 1, Schneidestempel 12). Die danach verbleibende Restfolie - in Fig. 2 mit 35 beziffert - wird von der Aufhaspelrolle 32 aufgenommen.

Das mit der gezogenen, geschnittenen und kleberbeschichteten Folie 13 beladene Tiefziehwerkzeug 11 wird nun in Pfeilrichtung 36, 37 zu dem in Position 21' berfindlichen Werkstück transportiert bis das Tiefziehwerkzeug eine entsprechende Position 11' einnimmt. Die Folie 13 kann jetzt auf den hierfür vorgesehenen Werkstück-Bereich 34 aufgebracht und verpreßt werden (vgl. hierzu auch Fig. 1). Anschließend kann das folienbeschichtete Werkstück in die Position 21" verbracht bzw. seiner weiteren Verwendung zugeführt werden. Das leere Tiefziehwerkzeug 11 wird schließlich - in Pfeilrichtungen 38, 39 - zurück zur Tiefziehanlage 10 transportiert.

## Patentansprüche

1. Verfahren zur Applizierung dreidimensional verformter Folien (13) auf komplexen Oberflächen von Werkstücken, insbesondere auf Karosserie- oder anderen Teilen von Kraftfahrzeugen, wobei die - zunächst unverformte - Folie (13) mittels Tiefziehwerkzeug (11) verformt, mit Kleber beschichtet, ausgeschnitten und schließlich auf die zu bedeckende Werkstückoberlläche (22, 24) aufgebracht wird, **dadurch gekennzeichnet, daß** die Folie (13) nach Abschluß des Tiefziehvorganges noch innerhalb des Tiefziehwerkzeuges (11) ausgeschnitten, anschließend zusammen mit dem Tiefziehwerkzeug (11) zum Werkstück (21) verbracht und schließlich - hierbei noch in dem Tiefziehwerkzeug (11) liegend - auf der zu bedeckenden Werkstückoberfläche (22, 34) positioniert, mit dem Werkstück (21) zusammengefügt und verpreßt wird und daß danach das Tiefziehwerkzeug (11) wieder an seinen Ausgangspunkt (10) zurückgeführt wird.

2. Verfahren nach Anspruch 1, **dadurch gekennzeichnet, daß** die Folie (13), vor ihrer Verformung im Tiefziehwerkzeug (11), auf ihrer von der Wirkseite abgewandten Innenfläche mit Kleber beschichtet wird.

3. Verfahren nach Anspruch 2, **dadurch gekennzeichnet, daß** über die Dicke der auf die Folie (13) aufzubringenden Kleberschicht Toleranzschwankungen ausgeglichen werden.

4. Verfahren nach Anspruch 1, 2 oder 3, **dadurch gekennzeichnet, daß** die Folie (13) durch einen Schneidestempel (12) ausgeschnitten wird.

5. Verfahren nach Anspruch 1, 2 oder 3, **dadurch gekennzeichnet, daß** die Folie (13) mittels Laserstrahl ausgeschnitten wird.

6. Verbindung nach Anspruch 1, 2 oder 3, **dadurch gekennzeichnet, daß** die Folie (13) mittels eines Fräserwerkzeugs ausgeschnitten wird.

7. Verfahren nach Anspruch 1, 2 oder 3, **dadurch gekennzeichnet, daß** die Folie (13) durch Wasserstrahlschneiden ausgeschnitten wird.

8. Verfahren nach einem oder mehreren der vorstehenden Ansprüche, **dadurch gekennzeichnet, daß** der zum Verpressen von verformter Folie (13) und zu bedeckendem Werkstück (21, 22) aufzuwendende Flächendruck (28) mechanisch durch das Tiefziehwerkzeug (11) aufgebracht wird.

9. Verfahren nach einem oder mehreren der Ansprüche 1 bis 7, **dadurch gekennzeichnet, daß** der zum Verpressen von verformter Folie (13) und zu bedeckendem Werkstück (21, 22) aufzuwendende Flächendruck (28) hydraulisch oder pneumatisch aufgebracht wird.

## Claims

1. Method for applying three-dimensionally formed sheets (13) to complex surfaces of workpieces, in particular to parts of the bodywork or other parts of motor vehicles, the - initially unformed - sheet (13) being formed by means of a thermoforming mould (11), coated with adhesive, cut out and finally applied to the workpiece surface (22, 34) to be covered, **characterized in that**, after completion of the thermoforming operation, the sheet (13) is cut out while still inside the thermoforming mould (11), subsequently brought along with the thermoforming mould (11) to the workpiece (21) and finally - while still lying in the thermoforming mould (11) - positioned on the workpiece surface (22, 34) to be covered, joined together with the workpiece (21) and pressed and **in that** thereafter the thermoforming mould (11) is returned to its starting point (10).

2. Method according to Claim 1, **characterized in that**, before it is formed in the thermoforming mould (11), the sheet (13) is coated with adhesive on its inner surface, facing away from the effective side.

3. Method according to Claim 2, **characterized in that** tolerance fluctuations are compensated by the thickness of the adhesive layer to be applied to the sheet (13).

4. Method according to Claim 1, 2 or 3, **characterized in that** the sheet (13) is cut out by a cutting punch (12).

5. Method according to Claim 1, 2 or 3, **characterized in that** the sheet (13) is cut out by means of a laser beam.

6. Method according to Claim 1, 2 or 3, **characterized in that** the sheet (13) is cut out by means of a milling tool.

7. Method according to Claim 1, 2 or 3, **characterized in that** the sheet (13) is cut out by water-jet cutting.

8. Method according to one or more of the preceding claims, **characterized in that** the surface pressure (28) to be applied for the pressing of the formed sheet (13) and the workpiece (21, 22) to be covered is mechanically applied by the thermoforming mould (11) .

9. Method according to one or more of Claims 1 to 7, **characterized in that** the surface pressure (28) to be applied for the pressing of the formed sheet (13) and the workpiece (21, 22) to be covered is applied hydraulically or pneumatically.

## Revendications

1. Procédé pour l'application de feuilles (13) façonnées en trois dimensions sur des surfaces complexes de pièces, en particulier sur des pièces de carrosserie ou autres de véhicules automobiles, la feuille (13) d'abord non façonnée étant façonnée au moyen d'un outil d'emboutissage (11), revêtue d'adhésif, découpée et enfin appliquée sur la surface (22, 34) de la pièce à recouvrir, **caractérisé en ce que** lorsque l'opération d'emboutissage est terminée, la feuille (13) est encore découpée dans l'outil d'emboutissage (11), est ensuite amenée avec l'outil d'emboutissage (11) vers la pièce (21) et enfin, tout en restant dans l'outil d'emboutissage (11), est placée sur la surface (22, 34) de la pièce à recouvrir, jointe à la pièce (21) et pressée, et **en ce qu'**ensuite, l'outil d'emboutissage (11) est ramené à nouveau à son point de départ (10).

2. Procédé selon la revendication 1, **caractérisé en ce que** la feuille (13) est revêtue d'adhésif sur sa surface intérieure opposée au côté actif avant son façonnage dans l'outil d'emboutissage (11).

3. Procédé selon la revendication 2, **caractérisé en ce que** des variations de tolérance sur l'épaisseur de la couche d'adhésif à appliquer sur la feuille (13) sont compensées.

4. Procédé selon la revendication 1, 2 ou 3, **caractérisé en ce que** la feuille (13) est découpée par un poinçon de découpe (12).

5. Procédé selon la revendication 1, 2 ou 3, **caractérisé en ce que** la feuille (13) est découpée au moyen d'un rayon laser.

6. Liaison selon la revendication 1, 2 ou 3, **caractérisée en ce que** la feuille (13) est découpée au moyen d'un outil de fraisage.

7. Procédé selon la revendication 1, 2 ou 3, **caractérisé en ce que** la feuille (13) est découpée par jet d'eau.

8. Procédé selon l'une ou plusieurs des revendications précédentes, **caractérisé en ce que** la pression de surface (28) qui doit être appliquée pour le pressage de la feuille (13) façonnée et de la pièce (21, 22) à recouvrir est appliquée mécaniquement par l'outil d'emboutissage (11).

9. Procédé selon l'une ou plusieurs des revendications 1 à 7, **caractérisé en ce que** la pression de surface (28) à appliquer pour le pressage de la feiulle façonnée (13) et de la pièce (21, 22) à recouvrir est appliquée par des moyens hydrauliques ou pneumatiques.
